# EUROPEAN PATENT APPLICATION

(11) **EP 3 407 631 A1**
(43) Date of publication of application: **28.11.2018**
(21) Application number: 18173391.6
(22) Date of filing: 21.05.2018
(51) Int. Cl.: H04W 4/80

(54) **A MOBILE SYSTEM FOR ACCESSING THE INTERNET IN EMERGENCY CONDITIONS**

(30) Priority: 22.05.2017 IT 201700055033
(71) Applicant: Piemme Telecom S.r.l., 24040 Lallio (BG) (IT)
(72) Inventor: Petrò, Omar, 24040 Lallio (BG) (IT)
(74) Representative: Bruni, Giovanni

(57) **Abstract**

*The invention refers to a system easily transportable by a team of rescuers to bring or restore connectivity to the Internet in a geographical area where said connectivity is absent or has failed, for example due to a natural disaster. The system according to the invention comprises a plurality of electronic devices interacting with each other so as to form a wireless telecommunications network of mesh topology. More precisely, each of said devices comprises a first antenna for the transponder of radio-frequency electromagnetic waves by means of the Wi-Fi technology. It is through said Wi-Fi antennas that the devices that make up the system connect to each other in such a way to form the mesh network. At least one of the devices in the system is also able to connect to the Internet. Thanks to this and to the formation of the mesh network, each device, through a second Wi-Fi antenna, is able to create a bubble of connectivity to the Internet in the immediate vicinity of the same. Through the connectivity bubbles created by the second antennas, a rescuer can access the Internet wirelessly..*

## Description

### Technical field of the invention

The present invention refers to devices that can be used in emergency conditions to provide support to operators called to perform extremely urgent interventions such as, for example, the rescue of injured persons, the search for survivors or the securing of buildings.

In particular, the present invention is applicable in the geographical areas where emergencies are created that make it impossible to access the Internet using traditional telecommunications equipment such as, for example, smartphones and tablets.

More precisely, the present invention relates to a system comprising a plurality of electronic devices which can be easily transportable in the aforesaid areas and capable of interacting with each other and with devices external to the system in order to allow the latter to access the internet network from said areas.

### Background art

As known, nowadays almost all the electronic devices that can access the internet (and possibly "navigate" in it) connect to the aforementioned network in "wireless" mode, that is by means of the transponder of radiofrequency electromagnetic waves.

In private environments (domestic, industrial or commercial), access to the Internet usually takes place through an electronic device (generally called "Access Point") integrating the modem functionality and connected to a wired telephone network. Outdoors, on the other hand, access to the internet takes place mostly via the cellular mobile radio network.

In both cases, connectivity to the internet depends on infrastructures generally consisting of wired networks and telecommunications stations. However, the infrastructures that allow access to the Internet are relatively delicate and are among the first infrastructures to cease to be operational when natural disasters such as landslides and earthquakes occur. As a result of this, whenever serious accidents or catastrophic events occur, rescuers and, in general, operators called to promptly intervene do not have the possibility to connect to the Internet wirelessly with traditional equipment such as, for example, smartphones and tablet. This limits the operations of the aforementioned persons, slowing down their intervention. Connectivity to the Internet wirelessly would also be extremely advantageous for any survivors who, if in possession of one of the aforementioned traditional telecommunications equipment, could use the Internet connection to signal their presence to the rescuers.

In the aforementioned situations, access to the internet could be achieved by using an equipment capable of connecting to the satellite network, such as a "satphone". These devices, however, are very expensive and not very common in the civil sphere.

It is therefore extremely unlikely that, in the event of an unforeseen catastrophic event, a survivor is in possession of a satphone. Furthermore, in order for all rescuers to be connected to the Internet (in a satellite way), each of them should be in possession of a satphone. This would obviously entail an unsustainable spending by the responsible bodies. Finally, it should be noted that a satphone, in order to access the internet, must be in line with at least one of the satellites that make up the network infrastructure to which it can connect. Not always, therefore, a satphone can be operational.

### Summary of the invention

The object of the present invention is to overcome the aforementioned drawbacks by indicating a mobile system which, in emergency conditions, allows to restore connectivity to the Internet in a geographical area where an event has occurred, which is such that access to the aforementioned is not possible by means of network traditional telecommunications equipment.

Incidentally, the term "mobile system" refers to a system comprising one or more devices that can easily be transported by a user, i.e. a system whose use does not impose restrictions on the user's mobility.

Object of the present invention is a mobile system which, in emergency conditions, is able to allow access to the Internet, at least wirelessly, in a specific geographical area where the connectivity to said network is absent or has failed.

According to the invention, the system comprises a plurality of electronic devices at least one of which including means for connection to the Internet, each of said devices comprising:
- a first omnidirectional antenna for the transponder of radio-frequency electromagnetic waves coding data suitable for traffic in the Internet,
   said first antenna being in communication with said means for connection to the Internet, if present in said device, so as to be able to receive from the latter a connectivity to the Internet,
   said first antenna being connectable to the first omnidirectional antenna of at least one other of said devices for the creation of a wireless telecommunications network of mesh topology where said devices act as nodes, the interconnection between said first antennas allowing forwarding of the network connectivity to the Internet between said devices (i.e. from the connection means to the Internet to the first omnidirectional antenna and from the latter to and between the first omnidirectional antennas of the other devices of the system);
- a second omnidirectional antenna for the transponder of radio-frequency electromagnetic waves coding data suitable for traffic in the Internet,
   said second antenna being in communication with said first antenna so as to be able to receive from the latter the connectivity to the internet network, said second antenna being suitable to create around itself a bubble of connectivity to the Internet, preferably by means of Wi-Fi technology.

Other innovative features of the present invention are illustrated in the following description and referred to in the dependent claims.

### Brief description of drawings

Further aspects and advantages of the present invention will become clear from the detailed description that follows, illustrating exemplary embodiment thereof and from the annexed drawings, given purely by way of explanatory and non-limiting examples, in which:
- Figure 1 shows a schematization of a mobile access system to the Internet network according to the present invention,
- Figure 2 shows a first alternative embodiment of the system of figure 1,
- Figure 3 shows a second alternative embodiment of the system of figure 1,
- Figure 4 is a schematic representation of the battery charging process,
- Figure 5 illustrates a high-level flow chart for managing the charge of the batteries, and
- Figure 6 shows the arrangement of the main components of the suitcase.

### Detailed description

In the following description, a figure may also be illustrated with reference to elements not expressly indicated in that figure but in other figures. The scale and proportions of the various elements depicted do not necessarily correspond to the real ones.

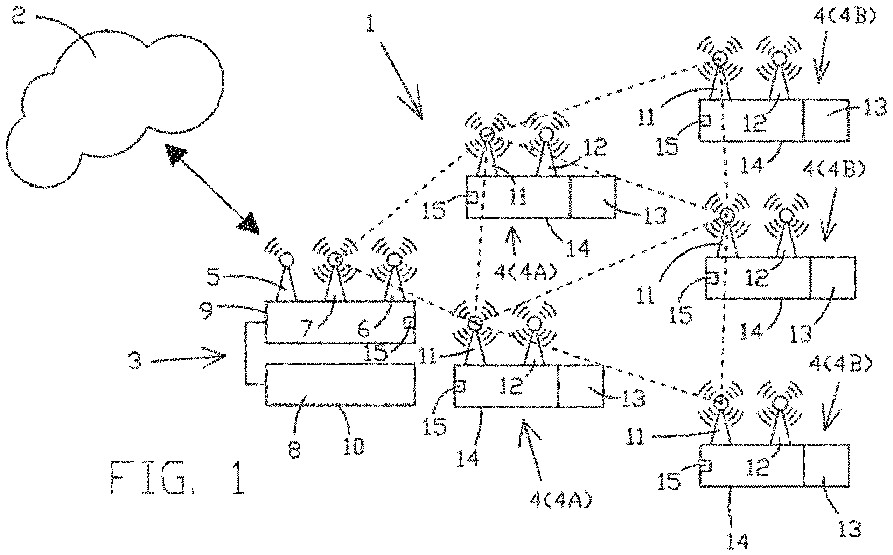

Figure 1 shows a system 1, object of the invention, which allows access to the Internet 2 in a geographic area where it is not possible to connect to said network 2 by means of traditional telecommunication equipment such as, for example, smartphones and tablets. More specifically, the system 1 comprises a plurality of electronic devices 3, 4 interacting with each other so as to form a wireless telecommunications network of mesh topology, and at least one of which (by way of example, the one shown in Figure 1 with the reference number 3) is able to connect to the Internet 2.

For the avoidance of doubt, in the embodiment of the system object of the invention which will be described below with reference to Figure 1, the connection to the Internet 2 is preferably carried out by means of a cellular mobile radio network. This is just one example of how to connect to the Internet 2. Further examples will be described later.

The device 3 comprises a first antenna 5 for the transmission of radio-frequency electromagnetic waves, suitable for establishing a connection with a cellular mobile radio network. The antenna 5 is preferably a high gain directive and more preferably it is of the 4G LTE type. It is through the connection to the mobile cellular network that the device 3 can access the Internet 2. To this end, the device 3 also includes a router, preferably an Ethernet router, connected to the antenna 5 for the routing of data towards the internet network 2.

The antenna 5, being preferably a high gain directive, is directed towards a nearby radio-telephony station and makes, with the latter, a connection preferably of the LTE 4G type. In this way, the device 3 is able to connect to an unreachable radiotelephony station (in LTE 2G, 3G or 4G mode, from the place where the device 3 is located) from the aforementioned traditional telecommunication equipment. The latter, in fact, are equipped with omnidirectional antennas for connection to a cellular mobile radio network, generally of the "integrated microstrip" type, and more precisely "PIFA", i.e. "Planar Inverted-F Antenna". The above mentioned devices therefore need a high level of connectivity (that is, a good "coverage" or a good "field signal") in order to access the cellular mobile radio network (and consequently the Internet 2). Device 3, on the other hand, is able to connect to the cellular mobile radio network even in areas where traditional equipment does not find any connectivity to said network (i.e. where there is no coverage). This is because a connectivity to the cellular mobile radio network so small that it is equivalent to an absence of connectivity for traditional telecommunications equipment, is however detectable by the device 3 via the antenna 5, so that to allow a connection to the cellular mobile radio network and, through this, to the Internet 2. By the way, the connection between the device 3 and the aforementioned cellular mobile network is a "data connection", i.e. a connection allowing Internet browsing, but not a telephone conversation (but only for software that use the Internet network 2, such as Skype).

Summarizing, the system 1 can be used in any geographical area where the device 3 is able to connect, via the antenna 5, to a radiotelephony station not sufficiently close to guarantee connectivity to the cellular mobile radio network (and therefore to the internet 2) traditional telecommunications equipment such as smartphones and tablets. A geographical area of the aforesaid typology may consist, for example, in a remote non-urbanized locality, or in a locality where the connectivity to the Internet 2 has failed as a result of a catastrophic event.

The device 3 also comprises a second antenna 6 for the transmission of radio-frequency electromagnetic waves, whose purpose is to allow access to the Internet 2, wirelessly, in the immediate vicinity of the antenna 6 (and consequently of the device 3).

The antenna 6 is preferably an omnidirectional antenna capable of transmitting waves encoding data suitable for the traffic in the Internet 2. The transmission of data by the antenna 6 is preferably done by means of the Wi-Fi technology. The antenna 6, like the antenna 5, is connected to the above mentioned router. Through the latter, the antenna 6 receives the connectivity to the Internet 2 from the antenna 5 and creates around it a "bubble" of connectivity that allows access to the Internet 2 (via the mobile radio network), in wireless mode, to the traditional telecommunications equipment located near the antenna 6 (and therefore, of the device 3). Through the latter, a person in possession of a smartphone or a tablet that is near the device 3 can therefore connect to the Internet 2, wirelessly, via the mobile radio network while being the aforementioned smartphone or tablet outside the range of the radiotelephony station with which the antenna 5 has built a connection.

The device 3 also comprises a third antenna 7 for the transmission of radio-frequency electromagnetic waves, whose purpose is to connect the device 3 with at least one of the remaining devices that make up the system 1 (shown in figure 1 with the reference number 4). The antenna 7 is preferably an omnidirectional antenna capable of transmitting waves encoding data suitable for traffic in the Internet 2. The transmission of data by the antenna 7 is preferably done by means of the Wi-Fi technology. The antenna 7, through the above mentioned router, is in communication with the antennas 5 and 6. Thanks to this, the connectivity to the Internet 2 is communicated by the antenna 5 not only to the antenna 6, but also to the antenna 7. As will be better illustrated in the following of the present description, the antenna 7 creates around itself another connectivity bubble, to connect the device 3 with at least one of the other electronic devices 4 which make up the system 1 and forward to the latter the connectivity to the internet network 2.

The device 3 also comprises an apparatus 8 for powering the components listed above. The apparatus 8 comprises batteries BAT, which as an example can guarantee the device 3 twelve hours of energy autonomy. Preferably, the apparatus 8 further comprises a voltmeter for monitoring the residual charge and signaling devices, preferably acoustic and luminous, to alert an operator if the level of charge falls below a predetermined threshold.

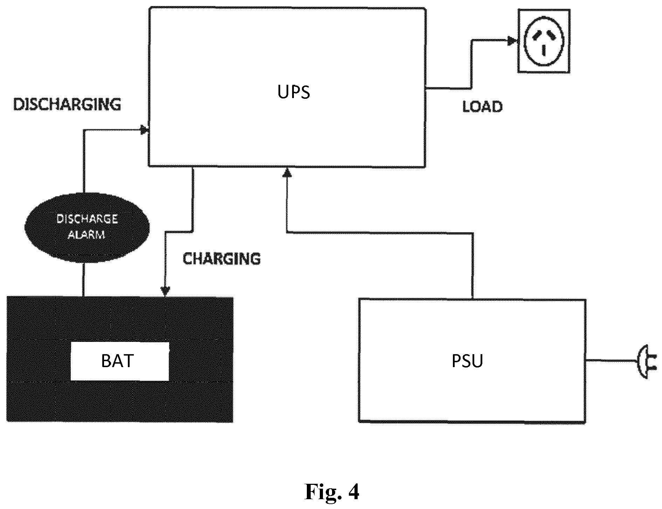

Figure 4 schematically represents the charging process of the batteries BAT by an electronic module UPS connected to a power supply unit PSU, with an integrated 220 V power supply. Alternatively, the power supply could be replaced by an external 12V battery pack.

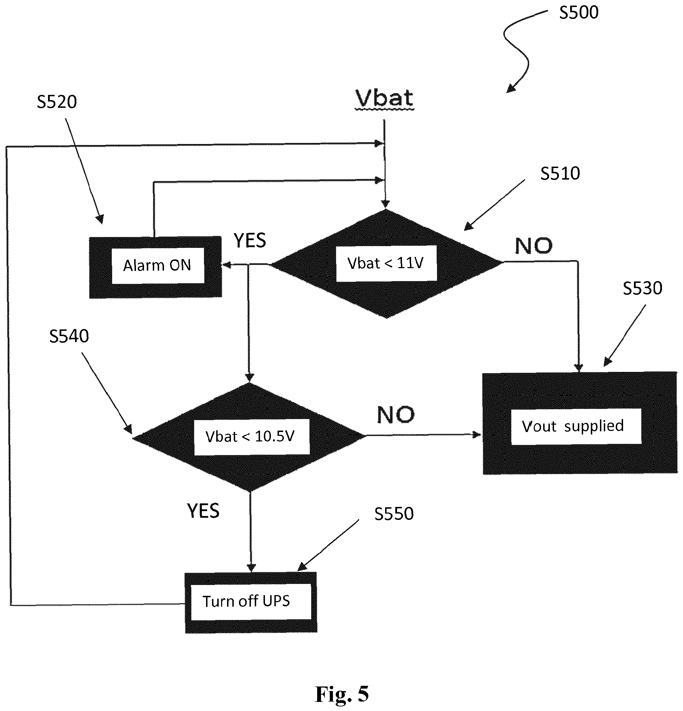

Figure 5 illustrates a high-level flow chart S500 for managing battery charge. The power management logic requires that the voltage Vbat (for example 12 V) is supplied by the electronic module UPS after being switched on using the appropriate external key. A first control S510 is performed to verify that the battery voltage does not fall below 11V. If this condition occurs, an alarm sounding battery discharge is provided S520which already intervenes at 11V even with the electronic module UPS switched off and a display for checking the battery voltage inside the suitcase. The supply voltage is normally supplied S530 until the battery reaches the discharge limit set at 10.5 V (second control: S540), after which the electronic module UPS automatically shuts off S550 and prevents damage to the battery. The system is able to operate normally during battery charging. The duration of the recharge is between 6-8 hours. The autonomy can instead be from 12 to 24 hours depending on the connected load.

Returning to Figure 1, the antennas 5, 6 and 7 are preferably connected to the device 3, and powered by the latter, by means of standard PoE interfaces (i.e. "Power over Ethernet").

Preferably, the device 3 is compact enough to be housed in two suitcases, also parts of the system 1. More precisely, the antennas 5, 6 and 7 and the electronics associated therewith are preferably housed in a first suitcase 9. The supply apparatus 8 is instead accommodated in a second suitcase 10. Each of the suitcases 9 and 10 has an overall size preferably not greater than 55 dm3, so as to be easily transportable by means of a frame backpack. The suitcases 9 and 10 are also resistant to the entry in the same of the powder and liquids according to a class preferably not less than IP67. Incidentally, "IP" stands for "International Protection" and is a coding established by the EN60529 standard that classifies the degree of protection provided by a casing against the intrusion of solid particles and the access of liquids. Assuming that the suitcases 9 and 10 belong to a class preferably not less than IP67 it is meant that the degree of protection provided by the suitcases 9 and 10 against the intrusion of solid particles is preferably not less than 6, and that the degree of protection supplied by the suitcases 9 and 10 against the access of liquids is preferably not less than 7. The characteristics of the casing, which can be carried as a suitcase and which protects in a field environment, the mobile access system in its electronic parts, are listed below:
- plastic housing resistant to high stresses,
- watertight seal with IP67 degree of impermeability, which guarantees perfect tightness to liquids and powders,
- elastomer seal along the entire closing profile,
- internal and external pressure balancing valve,
- total absence of metal parts, therefore no danger of oxidation,
- remarkable resistance to impact and atmospheric agents as well as to chemical agents.

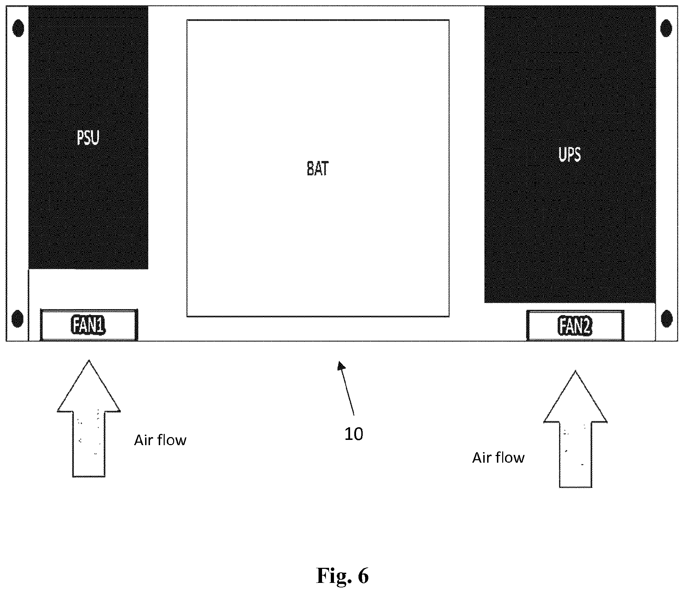

To keep the system within the operating temperature range, it was decided to use a closed ventilation system to distribute the heat evenly and to maintain the IP67 weather resistance characteristic. This system avoids heat spikes inside the casing that could damage the individual electronic components. Figure 6 shows the arrangement of the main components of the suitcase 10: the battery BAT is placed in the central position, while the power supply PSU and the electronic module UPS are positioned on its sides. In correspondence of these two components, two fans FAN1, FAN2 ensure the entry of an appropriate flow of air.

Returning again to Figure 1, it should be noted that, like the device 3, each device 4 comprises a first antenna 11 (for radio-frequency electromagnetic wave transponder) whose purpose is to connect the device 4 with the device 3 or with at least one of the other devices 4, and a second antenna 12 (for radio-frequency electromagnetic wave transponder) whose purpose is to allow access to the Internet 2, wirelessly, in the immediate vicinity of the antenna 12 (e consequently of the device 4).

Like antennas 6 and 7, antennas 11 and 12 are preferably omnidirectional antennas capable of transmitting waves encoding data suitable for traffic in the Internet 2. For this purpose, each device 4 comprises a router, preferably of the Ethernet router type, connected to antennas 11 and 12. The transmission of data by the latter is preferably via Wi-Fi technology.

By means of the antenna 11, each device 4 can connect to the antenna 7 of the device 3 and / or to the antenna 11 of another or other devices 4, so as to create a wireless telecommunications network of mesh topology where the devices 3 and 4 act as nodes. More precisely, like the antenna 7, the antenna 11 creates around itself a first connectivity bubble at least partially superimposed on the connectivity bubble created by the antenna 7 of the device 3 or the connectivity bubble created by the antenna 11 of another or other devices 4. The interconnection between the antennas 7 and 11, in addition to putting the devices 3 or 4 in communication with one another, allows the forwarding of the connectivity to the Internet 2 from the device 3 to at least another device 4 and between the remaining devices 4. More in detail, in each device 4, the antenna 11 receives the connectivity to the internet network 2 from the antenna 7 of the device 3 and / or from the antenna 11 of another or of other devices 4. The connectivity the Internet 2 is not only forwarded to the antenna 11 of another or of other devices 4, but also communicated, through the above-mentioned router, to the antenna 12 which, like the antenna 6, creates a connection bubble to the Internet network 2. A connection bubble allows access to the Internet 2, wirelessly, to the traditional telecommunications equipment located near the antenna 12 (and therefore, of the device 4) . A person in possession of a smartphone or a tablet that is near the device 4 can therefore connect to the Internet 2, wirelessly, through the mobile radio network even if the aforementioned smartphone or tablet cannot reach the station of radiotelephony with which the antenna 5 of the device 3 has built a connection.

Summarizing, the device 3 accesses the Internet 2, via the antenna 5, by means of the cellular mobile radio network. The antenna 5 communicates the connectivity to the Internet 2 both to the antenna 6, which generates a bubble of connectivity to the Internet 2 in the vicinity of the device 3, and to the antenna 7, which generates a bubble of connectivity to put the device 3 in communication with at least another device 4 and forwarding to the latter the connectivity to the Internet network 2. The device 4 communicates with the device 3 through the connectivity bubble created by the antenna 11, which receives the connectivity to the internet 2 from the antenna 7. The antenna 11 communicates the connectivity to the Internet 2 to the antenna 12, which generates a bubble of connectivity to the Internet 2 in the vicinity of the device 4. The antenna 11, through its own bubble of connectivity, connects with another or other devices 4, so as to propagate the Internet connectivity throughout the network represented by the system 1. Each device 4 may accessing the Internet 2 by connecting to the device 3 (such as the devices indicated in Figure 1 with the reference number 4A) or connecting to another or to other devices 4 (such as the devices indicated in Figure 1 with the reference number 4B) .

Each device 4 also comprises an apparatus 13 for powering the components listed above. Apparatus 13, like apparatus 8, includes batteries, which as an example can guarantee to the respective device 4 twelve hours of energy autonomy. Preferably, the apparatus 13 further comprises a voltmeter for monitoring the residual charge and signaling devices, preferably acoustic and luminous, to alert an operator if the charge level falls below a predetermined threshold.

Preferably, each device 4 is sufficiently compact to be housed in a respective third suitcase 14, also part of the system 1. Each suitcase 14, like the suitcases 9 and 10, has an overall size preferably not greater than 55 dm3, thus to be easily transportable by means of a frame backpack. Also the suitcases 14 are resistant to the entry of the powder and of liquids according to a class preferably not lower than IP67.

Like antennas 5, 6 and 7, each antenna 11 and 12 is preferably connected to the respective device 4, and powered by the latter, by means of a standard PoE interface.

In light of the above, the system 1, by connecting to a cellular mobile radio network, is able to bring connectivity to the Internet 2 network, wirelessly and preferably via Wi-Fi technology, to traditional telecommunications equipment, such as smartphones and tablet, in a geographical area where, for said traditional telecommunications equipment, there is no "coverage" by said cellular mobile radio network (i.e. where there is no connectivity to said cellular mobile radio network).

Advantageously, since the antennas 7 and 11 are preferably omnidirectional, the position of the devices 3 and 4 (i.e. of the nodes of the telecommunication network represented by the system 1) is not predefined. The system object of the invention is therefore adaptable to the geographical area where it is intended to be installed. The following example of system 1 application confirms what has been asserted.

Assume that in a specific geographic area a natural disaster occurred as a result of which some buildings present there have collapsed and connectivity to the Internet 2 has failed. The team of rescuers equipped with the system according to the invention, after having identified an appropriate radiotelephony station located near the area hit by the disaster, positions the device 3 in such a way that the latter can establish a connection with said radiotelephony station, and therefore with a cellular mobile radio network, through the antenna 5. The device 3 is then switched on and, once established, the connection with the cellular mobile radio network (and, through it, with the Internet 2), the antenna 6 creates a first bubble of connectivity to the Internet 2 in the vicinity of the device 3. At this point, being the antenna 7 omnidirectional, the team of rescuers can move away from the device 3, maintaining the connectivity to the antenna 7, proceeding in any direction. The further you move away from the antenna 7, the weaker the connectivity to the antenna becomes. Before said connectivity vanishes, a first device 4 (in this case, 4A) is positioned, switched on and connected to the antenna 7 through its own antenna 11. The latter communicates with the antenna 12, which creates a second bubble of connectivity to the Internet 2 in the vicinity of the device 4. Analogously to what has been said for the antenna 7, being the antenna 11 omnidirectional, the rescuers team can move away from the device 4, maintaining the connectivity to the antenna 11, proceeding in any direction. Before said connectivity vanishes a second device 4 (in this case, 4B) is positioned, switched on and connected to the antenna 11 of the first device 4 through its own antenna 11. The latter communicates with the respective antenna 12, which creates a third bubble of connectivity in the Internet 2 in the vicinity of the second device 4. It is possible in this way to create a network in which the connectivity to the Internet 2 is forwarded from one node to one or more nodes by means of multiple connectivity bubbles, partially overlapped, created by the antennas 7 and 11. The omnidirectionality of the antennas 7 and 11 means that, starting from the device 3, the network created by the system 1 can develop in any direction and with any configuration. In the example shown in Figure 1, two devices 4A are connected both to each other and to the device 3, and three devices 4B are connected both to each other and to one or both the devices 4A. This is extremely advantageous if, for example, landslides and / or collapses of buildings occur. In these cases, in fact, the team of rescuers, after having reached the place where the calamity occurred and having turned on the device 3, can penetrate the rubble following the path that it deems most appropriate and creating, through the devices 4, a network of internet connectivity bubbles (generated by antennas 6 and 12) that follows this path.

Advantageously, in the system of the invention, in the event of a device 4 being shut down or malfunctioning, the other devices 3 and 4 automatically reconfigure themselves in order to maintain the connectivity to the Internet 2 around the remaining working devices 3 and 4.

The antenna 5 represents only an example of means by which a device 3 or 4 of the system 1 can connect, directly, to the internet network 2 (via the cellular mobile radio network).

According to a variant of the system according to the invention not shown in the figures, at least one device 3 or 4 comprises a 2G, 3G or 4G router connected to an omnidirectional antenna. If the coverage by the cellular mobile radio network (for the traditional telecommunication equipment), instead of being completely absent in the geographic area where the system 1 is to be used, is present in at least a portion of said area, it is possible to place the device 3 or 4 including the aforesaid 2G, 3G or 4G router in correspondence with said portion of the geographic area (in which the connectivity to the cellular mobile radio network is present). In this case, the antenna of the 2G, 3G or 4G router can be used as a means of connection to the Internet 2 (via the mobile cellular network) instead of the antenna 5 of the device 3. In other words, if the device 3 or 4 including the aforementioned 2G, 3G or 4G router is located in a place where there is connectivity to the cellular mobile radio network, the device 3 or 4 can access said network and, through it, to the internet network 2 directly through the antenna of the 2G, 3G 4or G router rather than through the antenna 5. The connectivity to the Internet 2 is then forwarded to the other devices 3 or 4 in the manner described above. Further examples of means for connecting to the Internet 2 network (not necessarily by means of the cellular mobile radio network) of which devices 3 and 4 of system 1 can be provided will be illustrated in the following of the present description.

As previously mentioned, in the system according to the invention it is sufficient that at least one of the devices 3 or 4 is able to connect to the cellular mobile radio network (and, through this, to the Internet network 2). This does not change the fact that several devices 3 or 4 may include means for connecting to the Internet 2 network via or without the mobile cellular network (that is, regardless of whether said connection is via the cellular mobile network and / or through alternative connection means to antenna 5 or 2G, 3G or 4G router antenna). Advantageously, in the event that two or more devices 3 and 4 are connected to the Internet 2 (for example via the cellular mobile network, as in the system shown in Figure 1), the devices 3 and 4 are configured autonomously so that the connectivity to internet 2 follow the fastest route.

Comprising each device 3 or 4 an Ethernet router, each device further comprises at least one or more Ethernet ports 15 communicating with the antennas 5, 6 and 7 or 11 and 12. An operator located in the vicinity of a device 3 or 4 can advantageously access the Internet 2 by connecting, via cable, to a port 15 instead of wirelessly to the antenna 6 or 12.

In addition to this, the devices 3 or 4 can be connected to one another by means of an Ethernet cable through a respective port 15. Said devices 3 or 4 can therefore be put in communication with one another even when they are so distant from there being no connection between the antennas 7 or 11 thereof (i.e. even when there is no overlap between the connectivity bubbles generated by antennas 7 or 11).

The ports 15 of the devices 3 and 4 also allow to connect the same to an access point to the Internet 2 via an Ethernet cable. Let us assume, by way of example, that in the vicinity of the place where the system object of the invention is to be used, it is possible to access the Internet 2 via a wired telephone network (for example, through an ADSL connection). Instead of connecting the device 3 to the cellular mobile network via the antenna 5, it is possible to connect one of the devices 3 or 4 to the wired telephone network (and, through this, to the internet network 2) by connecting an Ethernet cable, at one end, to a port 15 of the device 3 or 4 and, at the other end, to an Ethernet port communicating with the wired telephone network. The ports 15 of the devices 3 and 4 can therefore be used, together with an Ethernet cable, as a means of connection to the Internet 2 network in place or in addition to the antenna 5 or the antenna of the 2G, 3G or 4G router mentioned above. More specifically, the devices 3 and 4 can access the Internet network 2, via cable, through a port 15 rather than through the antenna 5 (and consequently through a wired telephone network instead of via a cellular mobile radio network).

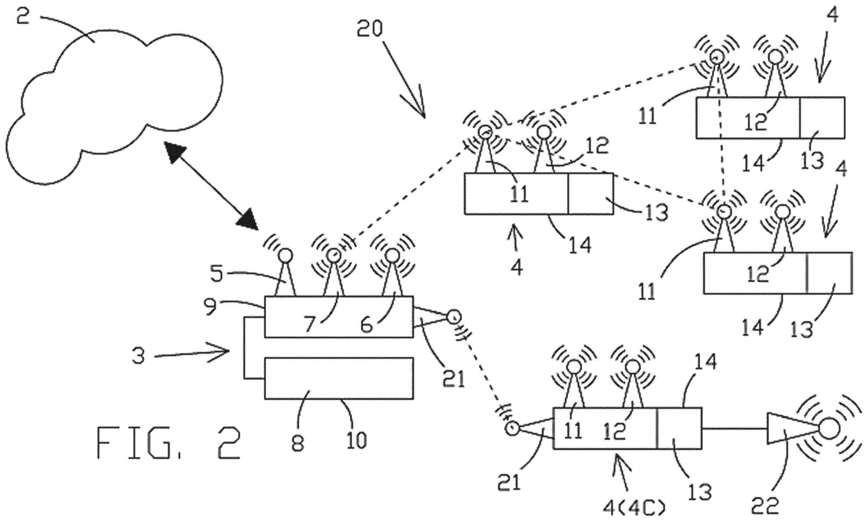

Figure 2 shows a system 20 which differs from the system 1 in that it comprises at least a pair of directive antennas 21 for the creation (between them) of a radio bridge, preferably of the "Bridge Wireless Point-to-Point" type. Thanks to the directive antennas used, it is possible to realize a point-to-point connection at distances up to 5 km with an easy pointing that makes the system activated by any non-specialized operator. Used in the mobile access system, they can increase the coverage range of the wireless system by overcoming natural obstacles more efficiently than omnidirectional antennas. In fact, the directive antennas possess a remarkable directive ability having an easy pointing thanks to the angle of irradiation of about 90°.

The antennas 21 are respectively connectable to two devices 3 or 4 of the system 20, in correspondence of the router (Ethernet) present in the same. In the example shown in Figure 2, one of the two antennas 21 is connected to the device 3 and the other to one of the devices 4 (shown in Figure 2 with the reference number 4C). Advantageously, thanks to the radio bridge which can be obtained through the antennas 21, the device 3 can connect with the device 4C even when the devices 3 and 4C are so distant from each other that there is no connection between the antennas 7 and 11 of the same (i.e. even when there is no overlap between the connectivity bubble generated by the antenna 7 of the device 3 and the connectivity bubble generated by the antenna 11 of the device 4C). In this case, therefore, between the devices 3 and 4C, the antennas 21 serve, instead of the antennas 7 and 11, by means of transponder of radio-frequency electromagnetic waves encoding data suitable for traffic in the Internet 2. In other words, the device 4C accesses the internet 2 (via the cellular mobile radio network) "passing" from the device 3 through the pair of antennas 21 instead of using the antennas 7 and 11. Like the antennas 5, 6 and 7 and the antennas 11 and 12, the antennas 21 are preferably connected to devices 3 and 4C, and can be supplied by the latter, by means of standard PoE interfaces. Incidentally, the pair of antennas 21 can be connected to any pair of devices 3 and 4 of the system 20. By means of the pair of antennas 21 it is possible to construct a radio bridge between any pair of devices 4 so distant from each other that there is no connection between the antennas 7 or 11 of the same devices.

Incidentally, rather than through a radio bridge created by a pair of antennas 21, the connection between two devices 3 or 4 very distant from one another can be achieved by creating a wireless telecommunications network of mesh topology by means of other devices 4.

Incidentally, the antennas 21 can also be used to make a connection to the Internet 2 instead of the antenna 5 and / or of the other connection means mentioned above. Let us again assume, by way of example, that in the vicinity of the place where the system object of the invention is to be used, it is possible to access the Internet 2 via a wired telephone network (for example, through an ADSL connection). Instead of connecting the device 3 to the mobile cellular network via the antenna 5, it is possible to connect one of the devices 3 or 4 to the wired telephone network (and, via this, to the internet 2) by connecting an antenna 21 to the device 3 or 4 and the other antenna 21 to an Ethernet port communicating with the wired telephone network. The antennas 21 can therefore be used as a means of connection to the Internet network 2 in place or in addition to the antenna 5 and / or to the other previously mentioned connection means.

The system 20 may further comprise at least one additional antenna 22 that can be connected to devices 3 or 4 to allow access to the Internet network 2 in the vicinity thereof. Like the antennas 6 and 12, the antenna 22 is an omnidirectional antenna capable of transmitting radio frequency waves encoding data suitable for the traffic in the Internet 2. The antenna 22 is, however, more powerful than the antennas 6 and 12 , and is therefore able to create a bubble of connectivity to the Internet 2 more extensive than those generated by the antennas 6 and 12. Advantageously, thanks to the antenna 22, a person in possession of a smartphone or a tablet that is in proximity of the device 3 or 4 to which the antenna 22 is connected can connect to the internet network 2 wirelessly at a distance from the antenna 22 greater than the maximum distance from the antenna 6 or 12 to which said person may ask for connectivity to the network 2. In these cases, therefore, access to the Internet 2 can take place through the antenna 22 in place of or in addition to the antennas 6 and 12. Like the antennas 5, 6, 7, the antennas 11 and 12 , and the antennas 21, the antenna 22 is preferably connected to the device 3 or 4, and can be supplied by the latter, by means of a standard PoE interface.

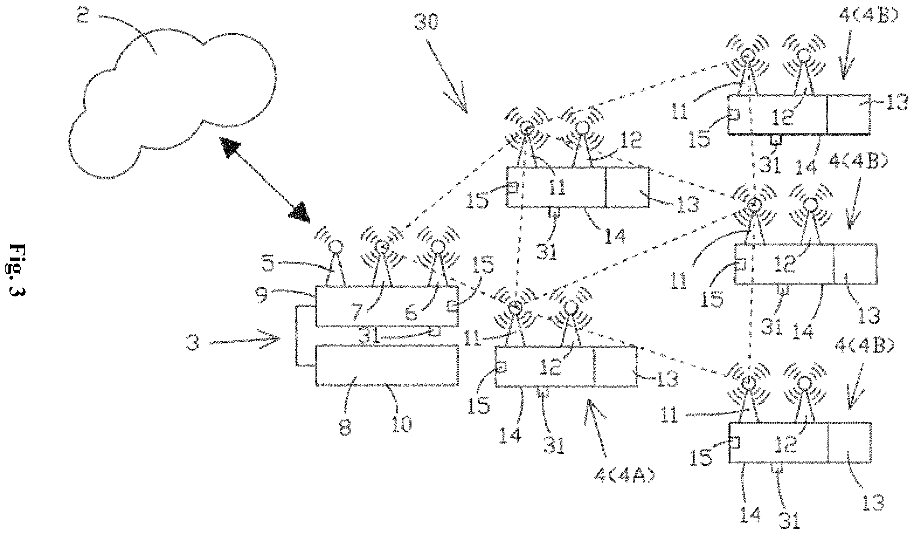

In Figure 3 the antenna 22 is shown connected to the device 4C. However, it can be connected to any device 3 or 4 of the system 20.

The system object of the invention (be it the system 1 or the system 20) can comprise at least one PoE cable for at least one of the antennas 5, 6, 12, 21 and 22. In this case, connecting one end of the PoE cable to the device 3 or 4 and the other end of the PoE cable to one of the antennas 5, 6, 12, 21 and 22, the latter can advantageously be placed at a certain distance from the device 3 or 4, depending on the length of the aforementioned PoE cable..

Figure 3 shows a system 30 which differs from the system 1 in that it comprises at least one device 3 or 4 at least one optical device 31 for acquiring images in the vicinity of the device 3 or 4. The device apparatus 31 is preferably a camera equipped with an infrared ray viewer and can be connected to the device 3 or 4 preferably by means of a PoE interface (through which the power supply of the apparatus 31 is also provided). Said PoE interface is preferably at 48 V. The images acquired by the apparatus 31 can be coded in radiofrequency electromagnetic waves so as to be transmittable from the antennas 7 and 11. Analogously to what has been said with reference to the antennas 5, 6, 12, 21 and 22 , the system 30 may comprise a PoE cable. In this case, by connecting one end of the PoE cable to the device 3 or 4 and the other end of the PoE cable to the apparatus 31, the latter can advantageously be placed at a certain distance from the device 3 or 4, depending on the length of the aforementioned PoE cable. Advantageously, through the apparatus 31 it is possible to implement a video control in the area in which the system object of the invention is installed.

Incidentally, the system object of the invention may comprise the system 1 and any combination of the additional components described above with reference to the systems 20 and 30. This combination may also consist of all the components mentioned above.

The system object of the invention may also comprise at least one antenna that can be connected to at least one device 3 or 4 to put the latter in communication with a satellite network. In this case, the connection to the Internet 2 could take place via the satellite network instead of via the mobile cellular network or the wired telephone network.

In addition to the embodiment of the invention, as described above, it is to be understood that numerous further variants exist. It must also be understood that said embodiments are only exemplary and do not limit the object of the invention, nor its applications, nor its possible configurations. On the contrary, although the above description makes it possible for the skilled man to implement the present invention at least according to an exemplary embodiment thereof, it must be understood that many variations of the described components are conceivable, without thereby escaping from the object of the invention, as defined in the attached claims, interpreted literally and / or according to their legal equivalents.

## Claims

1. Mobile system (1, 20, 30) for accessing the Internet (2), **characterized in that** it comprises a plurality of electronic devices (3, 4, 4A, 4B, 4C) at least one of which (3) including connection means (5, 15) to the Internet (2),
each of said devices (3, 4, 4A, 4B, 4C) comprising:
• a first omnidirectional antenna (7, 11) for the transmission of radio-frequency electromagnetic waves encoding data suitable for traffic in the Internet (2),
said first antenna (7, 11) being in communication with said connection means (5, 15), if present in said device (3), so as to be able to receive from the latter a connectivity to the internet (2),
said first antenna (7, 11) being connectable to said first antenna (7, 11) of at least one other of said devices (3, 4, 4A, 4B, 4C) for the creation of a wireless telecommunications network in a mesh topology way where said devices (3, 4, 4A, 4B, 4C) act as nodes,
the interconnection between said first antennas (7, 11) allowing forwarding of the connectivity to the internet (2) from said first antenna (7, 11) towards and between said first antennas (7, 11) of said other devices (3, 4, 4A, 4B, 4C) of said system (1, 20, 30);
• a second omnidirectional antenna (6, 12) for the transmission of radio-frequency electromagnetic waves encoding data suitable for traffic in the Internet (2),
said second antenna (6, 12) being in communication with said first antenna (7, 11) so as to be able to receive from the latter the connectivity to the internet (2),
said second antenna (6, 12) being suitable to create around itself a bubble of connectivity to the internet (2).

2. System (1, 20, 30) according to claim 1, **characterized in that** said first antennas (7, 11) are interconnectable with each other by means of the Wi-Fi technology.

3. System (1, 20, 30) according to claim 1, **characterized in that** said second antennas (6, 12) are suitable for creating said connectivity bubbles by means of Wi-Fi technology.

4. System (1, 20, 30) according to claim 1, **characterized in that** said connection means (5, 15) comprise a high gain directive antenna (5) suitable for establishing a connection with a radio telephony station of a cellular mobile radio network.

5. System according to claim 1, **characterized in that** said connection means comprise a 2G 3G 4G router connected to a third omnidirectional antenna, the latter being suitable for establishing a connection with a radiotelephony station of a cellular mobile radio network.

6. System (1, 20, 30) according to claim 4, **characterized in that** said connection means (5, 15) comprise an Ethernet port (15) that can be connected to an Ethernet cable to establish a connection with a wired telephone network.

7. System (20) according to claim 1, **characterized in that** it comprises at least a pair of directing antennas (21) for transmitting radio-frequency electromagnetic waves encoding data suitable for traffic in the internet (2),
said pair of directional antennas (21) being connectable to a pair of said devices (3, 4C) for the creation of a radio bridge between them, when said pair of directional antennas (21) is connected to said pair of devices:
• said first antennas (7, 11) of said pair of said devices (3, 4C) being respectively in communication with said pair of directional antennas (21) so as to be able to communicate to the latter or receive from the latter the network connectivity internet (2);
• said radio bridge being suitable to allow forwarding of connectivity to the internet (2) between said directive antennas (21);
• said second antennas (6, 12) of said pair of said devices (3, 4C) being respectively in communication with said pair of directional antennas (21) so as to be able to receive from them the connectivity to the internet network (2).

8. System according to claim 1, **characterized in that** said connection means comprise at least a pair of directive antennas (21) for the transponder of radio-frequency electromagnetic waves encoding data suitable for the traffic in the internet (2),
one of said directive antennas (21) being connectable to an access point to the internet network (2), the other directive antenna (21) being connectable to one of said devices for the creation of a radio bridge between the latter and said internet access point (2),
said radio bridge being suitable to allow forwarding of the connectivity to the internet (2) from said access point to said device,
said first antenna (7, 11) and said second antenna (6, 12) of said device being in communication with said directive antenna (21) connected to said device so as to receive from the latter the connectivity to the Internet (2).

9. System (1, 20, 30), according to claim 7 or 8, **characterized in that** said directive antennas (21) have an angle of irradiation substantially equal to 90 °.

10. System (30) according to claim 1, **characterized in that** it comprises at least one optical device (31) for acquiring images, said optical apparatus (31) being connectable to at least one of said devices (3, 4, 4A , 4B), the images acquired by said optical apparatus (31) being codable in radiofrequency electromagnetic waves transceiving from said first antennas (7, 11).

11. System (1, 20, 30) according to claim 1, **characterized in that** it comprises at least one suitcase (9, 10, 14) for each of said devices (3, 4, 4A, 4B, 4C), each of said suitcases (9, 10, 14) having a size not exceeding 55 dm3 and being resistant to the entry of the powder and liquids, said resistance being of a class not lower than IP67, each of said devices (3, 4, 4A, 4B, 4C) being accommodable in one or two of said suitcases (9, 10, 14).

12. System (1, 20, 30) according to claim 11, **characterized in that** each of said suitcases (9, 10, 14) is made of resistant plastic material with high stresses and comprises an elastomer seal along the entire closing profile and an internal and external pressure balancing valve.

13. System (1, 20, 30) according to claim 11 or 12, **characterized in that** the suitcase (10) contains inside a battery (BAT) in a central position, at the sides of which a power supply (PSU) and an electronic module (UPS) are positioned, in correspondence of which two fans (FAN1, FAN2) ensure the entry of an appropriate flow of air.

14. Method for managing the electrical supply of a system (1, 20, 30) according to one of the preceding claims, said system comprising a battery (BAT), an electronic module (UPS) and a power supply (PSU) or a package of external batteries, said method comprising the following steps:
- power supply with 12V voltage of the system components (1, 20, 30) by the battery (BAT), through the electronic module (UPS),
- switching on an audible alarm when the voltage supplied by the battery falls below 11V,
- switching off the electronic module (UPS) when the battery (BAT) reaches a discharge limit threshold set at 10.5 V and consequent power supply shutdown by the battery,
- battery (BAT) recharge by the electronic module (UPS) connected to the power supply (PSU) with a power supply of 220 V or to the external 12V battery pack.
